# EUROPEAN PATENT SPECIFICATION

(11) **EP 1 703 157 B1**
(45) Date of publication and mention of the grant of the patent: **03.02.2010**
(21) Application number: 06251433.6
(22) Date of filing: 17.03.2006
(51) Int. Cl.: F16D 3/16

(54) **Structure for preventing shaft of constant velocity joint from coming off**
Bauteil für die Verhinderung einer Welletrennung eines Gleichlaufgelenks
Structure pour empêcher une séparation d'arbre dans un joint homocinétique

(30) Priority: 18.03.2005 JP 2005079764
(43) Date of publication of application: 20.09.2006
(73) Proprietor: NTN Corporation, Osaka-shi, Osaka 550-0003 (JP)
(72) Inventor: Fukumura, Yoshikazu c/o NTN Corporation, Iwata-shi Shizuoka-ken (JP); Ueno, Tsuyoshi c/o NTN Corporation, Iwata-shi Shizuoka-ken (JP); Shinba, Chikaya c/o NTN Corporation, Iwata-shi Shizuoka-ken (JP); Shibata, Takaaki c/o NTN Corporation, Iwata-shi Shizuoka-ken (JP)
(74) Representative: White, Duncan Rohan

(56) References cited:
- JP-A- 6 193 642

## Description

### Field of the Invention

The present invention relates to a spline engagement structure for coupling an inner joint member with a shaft of constant velocity joints used in automobiles and various industrial equipments,.

### Background of the Invention

In conventional constant velocity joints for driving system or the like of automobiles, an inner joint member and a shaft are engaged detachably while employing a structure for preventing the shaft from coming off for reduction of maintenance man-hours of replacement of boots or the like. With this structure, a groove is formed at end face of the shaft, a retaining ring is provided to this groove, and the shaft is engaged with a contacting face being formed on the inner joint member by means of elastic expansion of the retaining ring. A mechanism used here is such that a corner is provided to a contacting face that interferes with the retaining ring when the shaft is pulled out, and disengagement is performed by radially contracting the retaining ring by component force of interference force with the retaining ring (see Japanese Unexamined Patent Publication No. 08-68426, Japanese Utility Model Publication No. 64-5124).

### SUMMARY OF THE INVENTION

There is a demand for a structure for connecting a shaft and an inner joint member that they should be anti-disassembly once built and disassembly.

A structure according to Japanese Unexamined Patent Publication No. 08-68426 is such that a retaining ring is provided at non-end face side of a shaft and a groove for inserting a tool for contracting a retaining ring is provided at end face of an inner joint member, thereby allowing assembly and disassembly. However, this mechanism requires much time and expenses to machine the tool engagement groove on the inner joint member.

Further, Japanese Utility Model Publication No. 64-5124 discloses a structure for contracting a retaining ring thereby allowing a shaft to be pulled out. The publication, however, does not show how to manage an angle of a groove sidewall for effecting two types of configurations where the one allows a shaft to be pulled out and the other does not.

JP 06 193 642 A shows the features of the preamble of claims 1 and 2.

Considering the aforementioned problems, the present invention presents a structure adapted to bring about a function without increasing inside joint members, and which prevents a shaft from coming off once the joint is assembled.

The present invention provides a structure for preventing a shaft of constant velocity joint from coming off according to the definition of the claims 1 and 2.

The contacting portions as defined in claim 1, prevent the retaining ring to be contracted when a force is applied to the shaft in a pulling out direction because said two contacting points contact the inner surface of the retaining ring thereby preventing the contracting movement of the ring. Thus the shaft cannot be pulled out.

The present invention further comprises a step part, as defined in claim 2, on one side of the retaining ring groove that is opposite to the pulling out direction of the shaft. The step part has a depth shorter than the thickness of the retaining ring.

The shaft and the inner joint member are coupled with spline section. The shaft cannot be pulled out as the retaining ring and its groove are located outside the spline section of the inner joint member and the retaining ring is sandwiched by the at least two contacting points of the groove and the slope part of the insertion hole thereby preventing inward movement of the ring.

As the shaft is inserted to and coupled with the insertion hole of said inner joint member through the spline section, the retaining ring groove is located in the range of the spline section of the inner joint member so that the retaining ring groove of the inner joint member forms a slope part to the retaining ring with facing to a retaining ring groove wall of the shaft.

With this configuration, even when a force is applied to the shaft in a pulling out direction, the slope part formed in the spline section of the inner joint member, at least two contacting faces formed on a side wall of the retaining ring groove at an opposite side of a shaft pulling out direction, or the step part contact with an inner surface of the retaining ring and sandwich the retaining ring thereby surely preventing movement in a radial contracting direction.

With the present invention, when a force is applied to the shaft in a pulling out direction, lower surface side of the retaining ring and at least two contacting faces of the retaining ring groove, or the step part make contact, and therefore, movement of the retaining ring in a radial contracting direction is prevented, and specification with which disassembly of the inner joint member and the shaft is not possible can be produced simply.

Accordingly, it is possible to produce specification with which disassembly is possible by a structure of a side wall of a retaining ring groove formed on a shaft without constituting an inner joint member and a retaining ring each as exclusive member, and specification with which disassembly is not possible, and therefore, shared use of parts is made possible thereby reducing man-hours required for parts control.

In order to obtain specification which allows disassembly of an inner joint member and a shaft, with specification free from at least two contacting faces on a side wall of a retaining ring groove of a shaft, and step part, by which such a force is given to move the retaining ring in a radial contracting direction using slope part at inner joint member side as slope surface, when a force is applied to the shaft in a pulling out direction, diameter of the retaining ring is contracted, the retaining ring is moved in the insertion hole, and prevention by the retaining ring can be prevented.

### BRIEF DESCRIPTION OF THE DRAWINGS

FIG. 1 is a fragmentary sectional view of a constant velocity joint showing embodiment of the present invention.
FIG. 2 is an enlarged view of part A in FIG. 1.
FIG. 3 is a perspective view of retaining ring shown in FIG. 1.
FIG. 4 is a sectional view showing a shaft pulled out state corresponding to FIG. 2.
FIG. 5 is a sectional view showing a retaining ring corresponding to FIG. 2 in sandwiched state.
FIG. 6 is a sectional view showing one embodiment of a retaining ring groove corresponding to FIG. 2.
FIG. 7 is a sectional view showing one embodiment of a retaining ring groove corresponding to FIG. 2.
FIG. 8 is a sectional view showing a retaining ring groove corresponding to FIG. 2 in different position.

### DESCRIPTION OF THE PREFERRED EMBODIMENTS

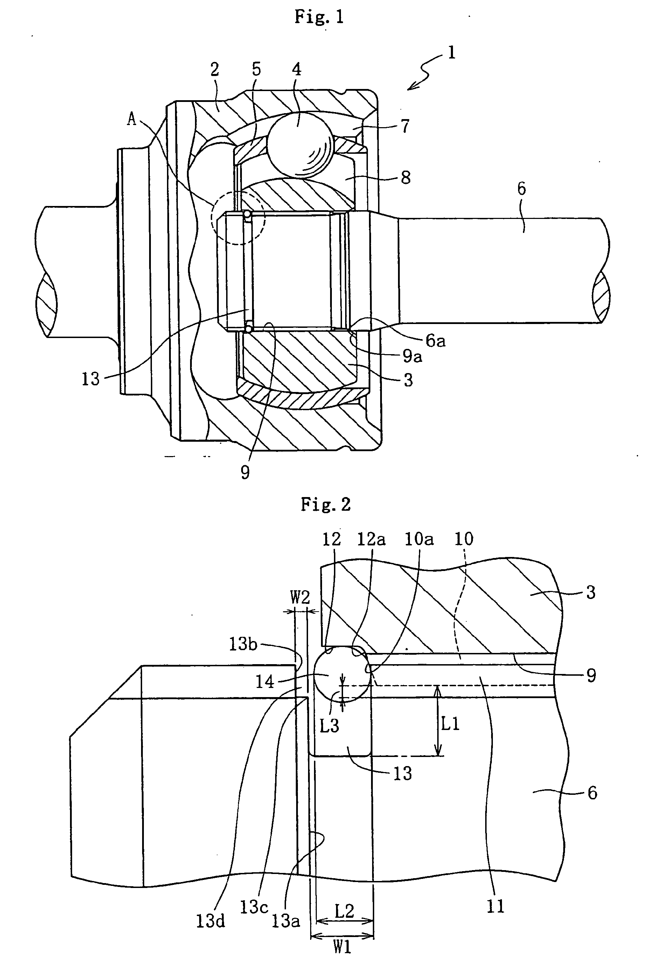

Referring now to FIG. 1 to FIG. 8, embodiments of the present invention will be explained hereafter. For convenience of explanation, front edge side denotes left side on the drawing and anti-front edge side denotes right side on the drawing. For convenience, explanations will be given referring to a fixed type constant velocity joint as shown in FIG. 1 in which the inner joint member is also referred to also as an inner ring.

As shown in FIG. 1, fixed type constant velocity joint 1 comprises outer ring 2, inner joint member 3, torque transmission ball 4, and cage 5 for torque transmission ball 4. Further, shaft 6 for transmitting torque is mounted to the inner joint member 3 in an engaging manner. The constant velocity joint, not limited to the fixed type constant velocity joint 1, may be sliding movement type constant velocity joint such as double-offset type, cross-globe type, tripod type or the like. Meanwhile, inner joint member in the double-offset type and cross-globe type are also referred to as the inner ring, while inner joint member in the tripod type are those referred to as a trunnion.

With the outer ring 2, a guide groove 7 in curved form is being formed on inside diameter surface in spherical form in circumferential direction at regular intervals. With the inner joint member 3, a guide groove 8 in curved form is being formed on outside diameter surface in spherical form in circumferential direction at regular intervals. The torque transmission ball 4 is built into a ball track formed by the guide groove 7 of the outer ring 2 and the guide groove 8 of the inner joint member 3.

As shown in FIG. 2, an insertion hole 9 for engagement with the shaft 6 is formed on the inner joint member 3 in axial direction. A spline 10 is formed on inner circumference surface of insertion hole 9 and when engaged with a spline 11 formed on the shaft 6, the inner joint member 3 and the shaft 6 are transmittably coupled.

The front edge side of the shaft 6 of the insertion hole 9 is subjected to diameter expansion processing and as shown in FIG. 2, a hole 12 having diameter larger than the insertion hole 9 is being formed. The hole 12 is continuous with a tapered part 10a of termination of the spline 10 via a slope surface 12a.

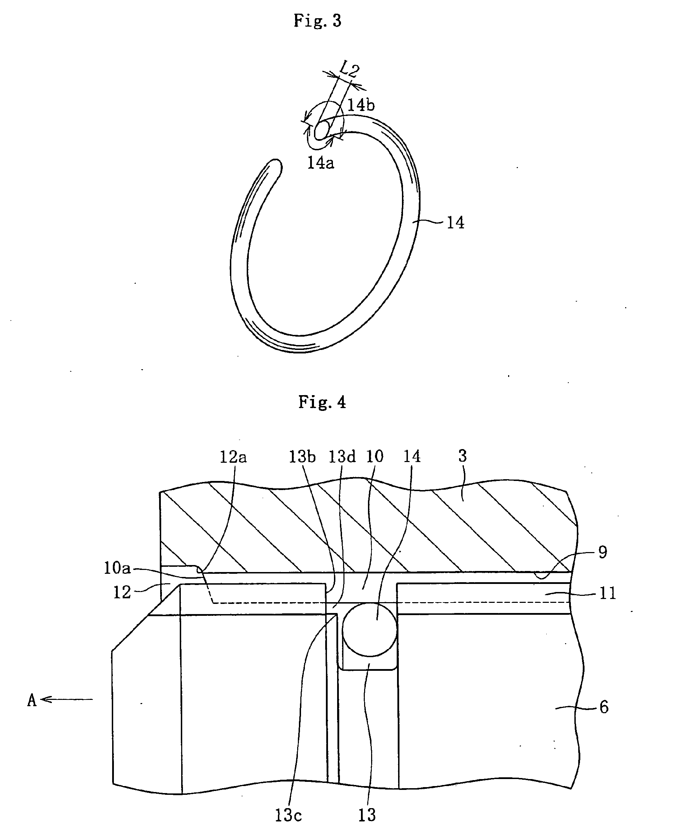

A retaining ring groove 13 in ring shape is being formed at front edge side of the shaft 6. As shown in FIG. 2, depth L1 and width W1 of this retaining ring groove 13 are made larger than wire diameter L2 of a retaining ring 14 for preventing a breakaway of the inner joint member 3 and the shaft 6 (L1 > L2, W1 > L2). With this configuration, when inserting the shaft 6 into the insertion hole 9 of the inner joint member 3 from right to left on FIG. 4, it is possible to cause diameter contraction of the retaining ring 14 less than a minor diameter of the spline 10 of the inner joint member 3.

As shown in FIG. 3, although the retaining ring 14 has a ring shape, it is cut in part so that it may be inserted into the retaining ring groove 13 after diameter contraction.

To a wall 13a at front edge side of the retaining ring groove 13 (side wall at an opposite side of a shaft pulling out direction) are formed a wall 13b perpendicular to an axis line to which an inner surface 14a of the retaining ring 14 makes contact when a force is applied to the shaft 6 in a pulling out direction and an orthogonal step part 13d which forms a corner 13c. This step part 13d has depth L3 in radial direction of the shaft 6 and width W2 in axial direction both of which are designed to be smaller than wire diameter L2 of the retaining ring 14 (L2 >L3, L2 > W2). Namely, the step part 13d is being formed by radial direction dimension L3 that is smaller than wire diameter L2 of the retaining ring 13 and axial direction dimension W2 that is smaller than the same.

An inner surface of the retaining ring 14 denotes a center side surface since the retaining ring 14 is being formed in ring-shape, and a range shown by an arrow 14a in FIG. 3 is meant. The range of this arrow 14a becomes a half circle for circular section case and includes a boundary between lower surface and upper surface.

When L2 ≤ L3, as the retaining ring 14 is accommodated within the step part 13d, a function for preventing the shaft from coming off is lost. Besides, when L2 ≤ W2, width of the retaining ring 13 becomes larger and an idle space where the shaft 6 can move in right and left directions in FIG. 2 becomes large which is not practical.

As for attachment of the shaft 6 to the inner joint member 3, the shaft 6 is inserted to the insertion hole 9 while the retaining ring 14 is disposed to the retaining ring groove 13 and the retaining ring 14 is being diameter contracted. On this occasion, the retaining ring 14 moves in sliding state while making elastic contact with the spline 10 of the insertion hole 9 (arrow A direction in FIG. 4).

When front edge of the shaft 6 reaches a position passing through the insertion hole 9 (virtually, a position where contact with the spline 10 is lost), an end 9a at anti-front edge side of the insertion hole 9 makes contact with a part 6a of the shaft 6 and insertion is blocked. Alternatively, a retaining ring may be mounted separately to regulate insertion length of the shaft 6 in which case the retaining ring makes contact with anti-front edge side of the insertion hole 9 thereby preventing further insertion.

At the point of time when insertion of the shaft 6 into the insertion hole 9 is ceased, the retaining ring 14 is positioned at the hole 12 with larger diameter getting away from contact with the spline 10, and therefore, diameter is expanded by elasticity. When the retaining ring 14 is diameter expanded, an outer circumference surface of the retaining ring 14 comes to contact with a peripheral wall of the hole 12 by elastic force, and therefore, the shaft 6 is brought into such that it is attached to the inner joint member 3.

At this state, the retaining ring 14 is not expanded completely and is positioned within an engagement range of the spline 10, 11 while making contact with the peripheral wall of the hole 12 and tapered part 10a.

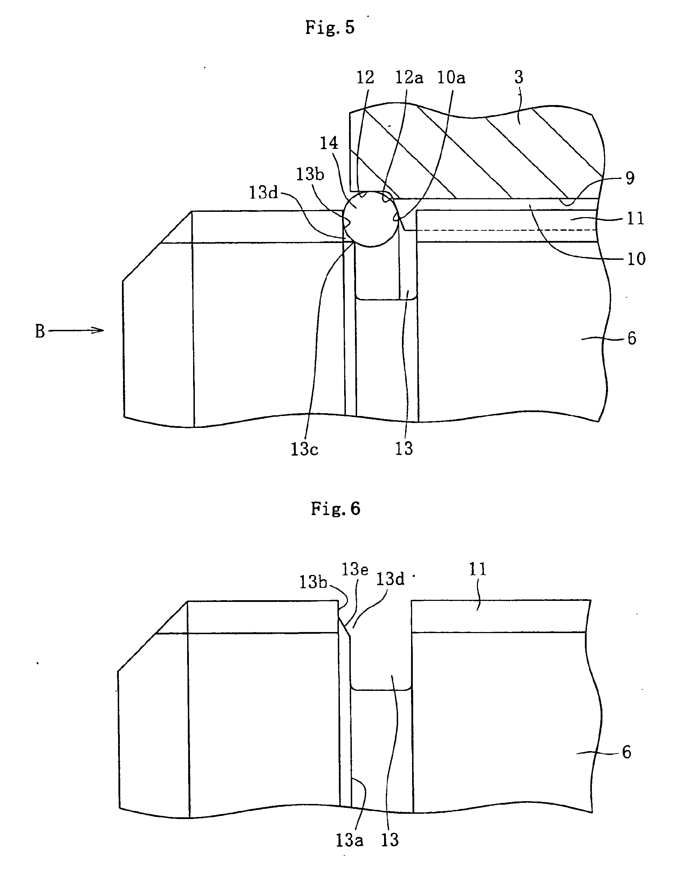

Therefore, when a force (arrow B direction in FIG. 5) is applied to the shaft 6 in a pulling out direction, the shaft 6 moves in parallel from FIG. 2 state to FIG. 5 state (this means movement in a direction of disengagement of spline 10, 11), while at this moment, a surface positioned at front edge side of the lower surface 14a of the retaining ring 14 makes contact with two points, the perpendicular wall 13b of the step part 13d and the corner 13c, and at the same time, anti-front edge side of the upper surface 14b of the retaining ring 14 makes contact with either the tapered part 10a formed at termination of the spline 10 of the inner joint member 3 or the slope part 12a, and the retaining ring 14 is brought into sandwiched state.

A contact with the perpendicular wall 13b takes place at a boundary between an inner surface 14a and an upper surface 14b of the retaining ring 14. A contact with the corner 13c takes place at a lower left circular arc surface, quarter area corresponding to from six o'clock to nine o'clock of a clock, in FIG. 5 of the lower surface 13a of the retaining ring 13.

The perpendicular wall 13b formed at front edge side of the retaining ring groove 13 and the corner 13c act as a contacting face of the shaft side and the tapered part 10a at termination of the spline 10 or the slope part 12a act as a slope part of the insertion hole 9 at inner joint member 3 side.

When a force is applied to the perpendicular wall 13b in a direction of pulling out the retaining ring 14, an inward force is applied to the retaining ring by a slope part (tapered part 10a or slope part 12a) to urge the ring to be contracted in a direction toward the center of the shaft. However, the contraction movement of the ring is prevented by the contacting part of the retaining ring groove 13, i.e., the perpendicular wall 13b and the corner 13c. Thus the retaining ring 14 cannot be entered in the retaining ring groove 13 as being locked. As a result, the shaft 6 cannot be pulled out.

In the case where the shaft 6 needs to be removed from the inner joint member 3, the step part 13d in the retaining ring groove 13 of the shaft 6 is not necessary. If the step part 13d is not formed and a force is applied to the shaft 6 in a pulling out direction, the retaining ring 14 is urged to be contracted by the tapered part 10a and slope surface 12a thereby entered into the retaining ring groove 13. As a result, the shaft 6 can be removed in a direction opposite to arrow A in FIG. 4.

As mentioned above, the step part 13d is obvious at a glance as the step 13 is formed in the retaining ring groove 13 of the shaft 6. To render the shaft 6 removable, the step part 13d in the retaining ring groove 13 of the shaft 6 should be abolished. The appearance of the shaft provides a clear recognition if the shaft is removable or not. Further, common use of inner joint member can be accomplished in each construction where the shaft is removable or anti removable, thereby reducing man-hours required for parts control.

When assembling the inner joint member 3 and the shaft 6, no special structure for preventing the removal of the shaft is needed and the conventional way of assembling can be simply used with contracting the retaining ring and inserting the same into the insertion hole of the inner joint member 3.

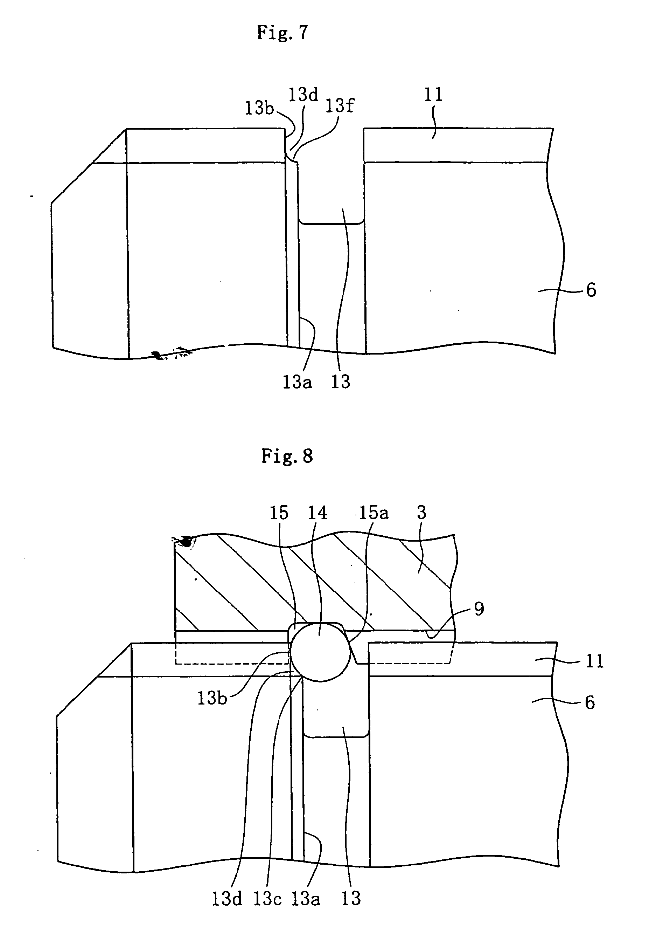

Besides, profile of the step part 13d may not necessarily be formed by the perpendicular wall 13b and the corner 13c as shown in FIG. 1. For example, a profile by the perpendicular wall 13b and the corner 13e as shown in FIG. 6 or by the perpendicular wall 13b and the circular arc surface 13f as shown in FIG. 7 can also provide at least two contacting parts. Although this step part 13d has been explained based on two contacting parts in the embodiment, it is possible to increase the number of contacting parts depending on a profile of step part.

Furthermore, the retaining ring groove 13 may be located anywhere within a range of the insertion hole 9 of the inner joint member 3. For example, as shown in FIG. 8, a groove 15 is provided in the middle of the spline 10, this groove 15 and the retaining ring 13 are disposed opposedly so that a part of the retaining ring 14 can be introduced into the groove 15. In this configuration, the structure of the retaining ring groove 13 is the same as that in Fig. 2 and a slope part of the inner joint member 3 forms a wall 15a at anti-front side of the groove 15. If a wall 15a is tilted so that the open side of the groove is widened in similar fashion as the slope surface 12a being continuous with the tapered part 10a of the spline 10, operational effects as attained in FIG. 2 are also obtained.

## Claims

1. A structure for preventing a shaft (6) of constant velocity joint (1) from coming off comprising:
an inner member (3) of the constant velocity joint having an insertion hole for engagement with a shaft;
the shaft having an annular retaining ring groove (13); and
a retaining ring (14) positioned in said retaining ring groove and being radially expandable and contractible elastically, wherein
when a pulling out force is applied to the shaft, the shaft is prevented from coming out by the retaining ring disposed between a slope part (12a) formed in the insertion hole of the inner joint member and said retaining ring groove,
**characterised in that**
a sidewall (13a) of the retaining ring groove at an opposite side of a shaft pulling out direction being formed with at least two contacting points contacting with an inner surface (14a) of the retaining ring.

2. A structure for preventing a shaft of constant velocity joint (1) from coming off comprising:
an inner member (3) of the constant velocity joint (1) having an insertion hole for engagement with a shaft;
the shaft having (6) an annular retaining ring groove (13); and
a retaining ring (14) positioned in said retaining ring groove and being radially expandable and contractible elastically, wherein
when a pulling out force is applied to the shaft, the shaft is prevented from coming out by the retaining ring disposed between a slope part (12a) formed in the insertion hole of the inner joint member and said retaining ring groove,
**characterised in that**
a sidewall (13a) of the retaining ring groove at an opposite side of the shaft pulling out direction being formed with a step part (13d) originating from an outer surface of the shaft and having a radial dimension smaller than a diameter of wire of the retaining ring.

3. The structure for preventing a shaft of constant velocity joint from coming off according to Claim 1, wherein the retaining ring groove is formed outside a range of the spline section of the inner joint member in an axial direction thereof where the shaft and the inner joint member are coupled with the spline section and the shaft is attached to the insertion hole of said inner joint member.

4. The structure for preventing a shaft of constant velocity joint from coming off according to Claim 2, wherein the retaining ring groove is formed outside a range of the spline section of the inner joint member in an axial direction thereof where the shaft and the inner joint member are coupled with the spline section and the shaft is attached to the insertion hole of said inner joint member.

5. The structure for preventing a shaft of constant velocity joint from coming off according to Claim 1, wherein the retaining ring groove is formed within a range of the spline section of the inner joint member, the shaft and the inner joint member are coupled with the spline section, the shaft is attached to the insertion hole of said inner joint member, said retaining groove is opposed to a groove formed in the spline section of the inner joint member, and said slope part is formed on a wall of the groove at shaft pulling out side.

6. The structure for preventing a shaft of constant velocity joint from coming off according to Claim 2, wherein the retaining ring groove is formed within a range of the spline section of the inner joint member, the shaft and the inner joint member are coupled with the spline section, the shaft is attached to the insertion hole of said inner joint member, said retaining groove is opposed to a groove formed in the spline section of the inner joint member, and said slope part is formed on a wall of the groove at shaft pulling out side.

## Patentansprüche

1. Struktur, um zu verhindern, dass sich eine Welle (6) eines Doppelgelenks (1) ablöst, wobei die Struktur Folgendes umfasst:
ein inneres Element (3) des Doppelgelenks, das ein Einsetzloch für einen Eingriff mit einer Welle hat,
die Welle, die eine ringförmige Rückhaltering-Nut (13) hat, und
einen Rückhaltering (14), der in der Rückhaltering-Nut angeordnet ist und elastisch in Radialrichtung ausdehnbar und zusammenziehbar ist, wobei
wenn eine Zugkraft auf die Welle ausgeübt wird, die Welle daran gehindert wird, herauszukommen, durch den Rückhaltering, der zwischen einem in dem Einsetzloch des inneren Gelenkelements geformten Abschrägungsteil (12a) und der Rückhaltering-Nut angeordnet ist,
**dadurch gekennzeichnet, dass**
eine Seitenwand (13a) der Rückhaltering-Nut an einer entgegengesetzten Seite einer Wellenauszugsrichtung mit wenigstens zwei Berührungspunkten geformt ist, die sich mit einer Innenfläche (14a) des Rückhaltering berühren.

2. Struktur, um zu verhindern, dass sich eine Welle eines Doppelgelenks (1) ablöst, wobei die Struktur Folgendes umfasst:
ein inneres Element (3) des Doppelgelenks (1), das ein Einsetzloch für einen Eingriff mit einer Welle hat,
die Welle (6), die eine ringförmige Rückhaltering-Nut (13) hat, und
einen Rückhaltering (14), der in der Rückhaltering-Nut angeordnet ist und elastisch in Radialrichtung ausdehnbar und zusammenziehbar ist, wobei
wenn eine Zugkraft auf die Welle ausgeübt wird, die Welle daran gehindert wird, herauszukommen, durch den Rückhaltering, der zwischen einem in dem Einsetzloch des inneren Gelenkelements geformten Abschtägungsteil (12a) und der Rückhaltering-Nut angeordnet ist,
**dadurch gekennzeichnet, dass**
eine Seitenwand (13a) der Rückhaltering-Nut an einer entgegengesetzten Seite einer Wellenauszugsrichtung mit einem Stufenteil (13d) geformt ist, der aus einer Außenfläche der Welle hervorgeht und eine radiale Abmessung hat, die kleiner ist als ein Drahtdurchmesser des Rückhalterings.

3. Struktur, um zu verhindern, dass sich eine Welle eines Doppelgelenks ablöst, nach Anspruch 1, wobei die Rückhaltering-Nut außerhalb eines Bereichs der Keilnutsektion des inneren Gelenkelements in einer axialen Richtung desselben geformt ist, wo die Welle und das innere Gelenkelement mit der Keilnutsektion gekoppelt sind, und die Welle an dem Einsetzloch des inneren Gelenkelements befestigt ist.

4. Struktur, um zu verhindern, dass sich eine Welle eines Doppelgelenks ablöst, nach Anspruch 2, wobei die Rückhaltering-Nut außerhalb eines Bereichs der Keilnutsektion des inneren Gelenkelements in einer axialen Richtung desselben geformt ist, wo die Welle und das innere Gelenkelement mit der Keilnutsektion gekoppelt sind, und die Welle an dem Einsetzloch des inneren Gelenkelements befestigt ist.

5. Struktur, um zu verhindern, dass sich eine Welle eines Doppelgelenks ablöst, nach Anspruch 1, wobei die Rückhaltering-Nut innerhalb eines Bereichs der Keilnutsektion des inneren Gelenkelements geformt ist, die Welle und das innere Gelenkelement mit der Keilnutsektion gekoppelt sind, die Welle an dem Einsetzloch des inneren Gelenkelements befestigt ist, die Rückhaltenut einer in der Keilnutsektion des inneren Gelenkelements geformten Nut gegenüberliegt und der Abschrägungsteil an einer Wand der Nut auf der Wellenauszugsseite geformt ist.

6. Struktur, um zu verhindern, dass sich eine Welle eines Doppelgelenks ablöst, nach Anspruch 2, wobei die Rückhaltering-Nut innerhalb eines Bereichs der Keilnutsektion des inneren Gelenkelements geformt ist, die Welle und das innere Gelenkelement mit der Keilnutsektion gekoppelt sind, die Welle an dem Einsetzloch des inneren Gelenkelements befestigt ist, die Rückhaltenut einer in der Keilnutsektion des inneren Gelenkelements geformten Nut gegenüberliegt und der Abschrägungsteil an einer Wand der Nut auf der Wellenauszugsseite geformt ist.

## Revendications

1. Structure destinée à empêcher une séparation d'un arbre (6) d'un joint homocinétique (1), comprenant:
un élément interne (3) du joint homocinétique, comportant un trou d'insertion en vue de l'engagement d'un arbre;
l'arbre comportant une rainure de bague de retenue annulaire (13) ; et
une bague de retenue (14) positionnée dans ladite rainure de bague de retenue et pouvant être dilatée radialement et contractée de manière élastique; dans laquelle
une séparation de l'arbre est empêchée par la bague de retenue agencée entre une partie inclinée (12a) formée dans le trou d'insertion de l'élément de joint interne et ladite rainure de bague de retenue lors de l'application d'une force d'extraction à l'arbre, **caractérisée en ce que**
une paroi latérale (13a) de la rainure de bague de retenue, au niveau d'un côté opposé à une direction d'extraction de l'arbre, comporte au moins deux points de contact, contactant une surface interne (14a) de la bague de retenue.

2. Structure destinée à empêcher la séparation d'un arbre d'un joint homocinétique (1), comprenant :
un élément interne (3) du joint homocinétique (1), comportant un trou d'insertion en vue de l'engagement d'un arbre ;
l'arbre (6) comportant une rainure de bague de retenue annulaire (13) ; et
une bague de retenue (14) positionnée dans ladite rainure à bague de retenue et pouvant être dilatée radialement et contractée de manière élastique; dans laquelle
une séparation de l'arbre est empêchée par la bague de retenue agencée entre une partie inclinée (12a) formée dans le trou d'insertion de l'élément de joint interne et ladite rainure de bague de retenue lors de l'application d'une force d'extraction à l'arbre, **caractérisée en ce que**
une paroi latérale (13a) de la rainure de bague de retenue, au niveau d'un côté opposé à une direction d'extraction de l'arbre, comporte une partie de gradin (13d) s'étendant à partir d'une surface externe de l'arbre et ayant une dimension radiale inférieure à un diamètre du fil de la bague de retenue.

3. Structure destinée à empêcher la séparation d'un arbre d'un joint homocinétique selon la revendication 1, dans laquelle la rainure de bague de retenue est formée à l'extérieur d'un intervalle de la section cannelée de l'élément de joint interne, dans une direction axiale de celui-ci, l'arbre et l'élément de joint interne étant accouplés à la section cannelée et l'arbre étant fixé sur le trou d'insertion dudit élément de joint interne.

4. Structure destinée à empêcher la séparation d'un arbre d'un joint homocinétique selon la revendication 2, dans laquelle la rainure de bague de retenue est formée à l'extérieur d'un intervalle de la section cannelée de l'élément de joint interne, dans une direction axiale de celui-ci, l'arbre et l'élément de joint interne étant accouplés à la section cannelée, l'arbre étant fixé sur le trou d'insertion dudit élément de joint interne.

5. Structure destinée à empêcher la séparation d'un arbre d'un joint homocinétique selon la revendication 1, dans laquelle la rainure de bague de retenue est formée dans le cadre d'un intervalle de la section cannelée de l'élément de joint interne, l'arbre et l'élément de joint interne étant accouplés à la section cannelée, l'arbre étant fixé sur le trou d'insertion dudit élément de joint interne, ladite rainure de retenue étant opposée à une rainure formée dans la section cannelée de l'élément de joint interne, et ladite partie inclinée étant formée sur une paroi de la rainure au niveau du côté d'extraction de l'arbre.

6. Structure destinée à empêcher la séparation d'un arbre d'un joint homocinétique selon la revendication 2, dans laquelle la rainure de bague de retenue est formée dans le cadre d'un intervalle de la section cannelée de l'élément de joint interne, l'arbre et l'élément de joint interne étant accouplés à la section cannelée, l'arbre étant fixé sur le trou d'insertion dudit élément de joint interne, ladite rainure de retenue étant opposée à une rainure formée dans la section cannelée de l'élément de joint interne, et ladite partie inclinée étant formée sur une paroi de la rainure au niveau du côté d'extraction de l'arbre.
